# EUROPÄISCHE PATENTSCHRIFT

(11) **EP 1 752 696 B1**
(45) Veröffentlichungstag und Bekanntmachung des Hinweises auf die Patenterteilung: **15.09.2010**
(21) Anmeldenummer: 06014205.6
(22) Anmeldetag: 08.07.2006
(51) Int. Cl.: F16L 27/08

(54) **Drehdurchführung mit Leckagesensor**
Rotatable connection with leakage sensor
Jonction rotative avec détecteur de fuites

(30) Priorität: 13.08.2005 DE 102005038459
(43) Veröffentlichungstag der Anmeldung: 14.02.2007
(73) Patentinhaber: OTT-JAKOB GmbH & Co. Spanntechnik KG, 87663 Lengenwang (DE)
(72) Erfinder: Mohr, Peter, 87487 Wiggensbach (DE); Bechteler, Wolfgang, 87640 Biessenhofen (DE); Gast, Stephan, 86987 Schwabsoien (DE); Leidl, Hans, 87439 Kempten (DE)
(74) Vertreter: Schwarz, Thomas

(56) Entgegenhaltungen:
- EP-A- 0 392 838
- EP-A- 0 799 670
- DE-A1- 10 225 272
- JP-A- 2004 028 164
- US-A- 3 799 585

## Beschreibung

Die Erfindung betrifft eine Drehdurchführung nach dem Oberbegriff des Anspruchs 1.

Aus der JP-A-2004028164 ist eine gattungsgemäße Drehdurchführung für die Zuführung eines Fluids zu einem rotierenden Maschinenteil bekannt. Diese Drehdurchführung enthält eine innerhalb eines Gehäuses drehbar gelagerte Hohlwelle mit einer ersten Gleitfläche, eine in dem Gehäuse verdrehfest angeordnete, zu der Hohlwelle koaxiale Dichtungsbuchse mit einer an der Gleitfläche der Hohlwelle zur Anlage gelangende zweiten Gleitfläche und einen innerhalb des Gehäuses angeordneten Auffangraum, in dem das zwischen den Gleitflächen der rotierenden Hohlwelle und der drehfesten Dichtungsbuchse austretende Leckagefluid gesammelt werden kann. Bei dieser Ausführung ragt ein am hinteren Ende der Hohlwelle angeordneter Zapfen durch eine Trennwand, die den Auffangraum begrenzt. Innerhalb der Trennwand verläuft ein zusätzlicher radialer Detektionskanal, der mit dem Auffangraum über einen Spalt zwischen dem Zapfen und der Trennwand verbunden ist. An den Detektionskanal ist ein Leckagesensor angeschlossen. Bei dieser bekannten Drehdurchführung ist jedoch die Aufnahmekapazität des Detektionskanals beschränkt.

Aufgabe der Erfindung ist es, eine Drehdurchführung der eingangs genannten Art zu schaffen, die eine erhöhte Aufnahmekapazität des Detektionskanals aufweist und eine verbesserte Überwachung des innerhalb der Drehdurchführung gesammelten Leckagefluids ermöglicht.

Diese Aufgabe wird durch eine Drehdurchführung mit den Merkmalen des Anspruchs 1 gelöst. Zweckmäßige Ausgestaltungen und vorteilhafte Weiterbildungen der Erfindung sind in den Unteransprüchen angegeben.

Bei der erfindungsgemäßen Drehdurchführung zweigt der Detektionskanal von dem Auffangraum ab und ist derart ausgestaltet, dass das Leckagefluid in der Regel nur dann in den Detektionskanal gelangt, wenn das Leckagefluid über den konventionellen Sammelraum und die zugehörige Leckageöffnung nicht ordnungsgemäß abgeführt wird oder in der Ablaufleitung eine z.B. durch Knick oder Verstopfung bedingte Störung auftritt. Erst wenn sich das Leckagefluid innerhalb des Auffangraums aufstaut, gelangt es in den zusätzlichen Detektionskanal und wird an dessen Ende von dem dort angeordneten Leckagesensor erfasst. Dadurch kann ein für die Funktionsweise der Drehdurchführung kritischer Zustand erfasst und eine Schädigung der Drehdurchführung vermieden werden. Der Detektionskanal verläuft in Art eines Labyrinths durch das Gehäuse der Drehdurchführung und weist einen entlang der Hohlwelle verlaufenden inneren Leckagekanal sowie mindestens einen dazu radial versetzten äußeren Leckagekanal auf, wobei der radial innere Leckagekanal in Art eines Ringkanals ausgeführtist, der durch einen ersten Ringspalt zwischen einer auf dem inneren Ende der Hohlwelle angeordneten Spannbuchse und einer im Gehäuse angeordneten Dichtungshülse, durch Durchgänge zwischen den Außen- und Innenringen der Drehlager zur Lagerung der Hohlwelle, durch einen zweiten Ringspalt zwischen einem Ringbund der Hohlwelle und dem Gehäuse sowie durch einen Radialspalt an der den Drehlagern zugewandten Stirnseite des Ringbunds gebildet wird.

Die Fluidverbindung zwischen dem Auffangkanal und dem inneren Leckagekanal erfolgt in einer bevorzugten Ausführung über einen Radialspalt zwischen einem Endflansch der Spannbuchse und einer hinteren Stirnfläche der Dichtungshülse.

Der radial äußere Leckagekanal wird vorzugsweise durch mindestens eine parallel zur Hohlwelle verlaufende Axialbohrung in einem vorderen Gehäuseteil und durch eine mit der Axialbohrung verbundene Aufnahmebohrung in einem hinteren Gehäuseteil gebildet. Die Fluidverbindung zwischen dem inneren Leckagekanal und dem äußerem Leckagekanal erfolgt über einen Radialkanal, der im vorderen Bereich der Drehdurchführung angeordnet ist.

Der Leckagesensor ist in einer bevorzugten Ausführung als Durchflusssensor ausgeführt, der vorzugsweise nach dem kalorimetrischen Messprinzip arbeitet und eine Temperaturkompensation aufweist. Dadurch können nicht nur wässrige Fluide, sondern auch nicht-polare Flüssigkeiten wie z.B. Mineralöle erfasst werden. Selbstverständlich können aber auch andere geeignete Sensoren verwendet werden.

Der Leckagesensor ist zweckmäßigerweise an eine innerhalb des Gehäuses angeordnete Platine mit einer Auswerteschaltung angeschlossen. Die gesamte Sensorik und Auswerteschaltung ist somit innerhalb des Gehäuses integriert und dadurch sehr gut gegen Verschmutzung und elektromagnetische Störungen abgeschirmt.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Drehdurchführung in einem ersten Längsschnitt und
- **Figur 2**: die Drehdurchführung von Figur 1 in einem zweiten Längsschnitt.

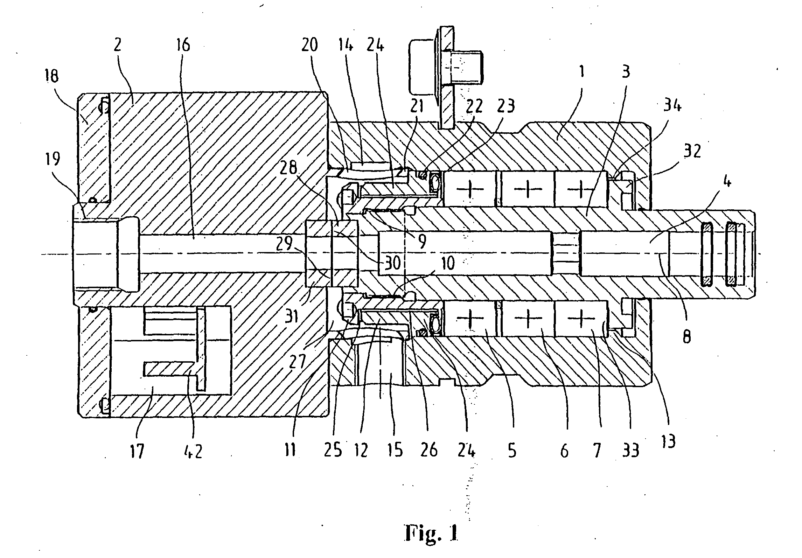

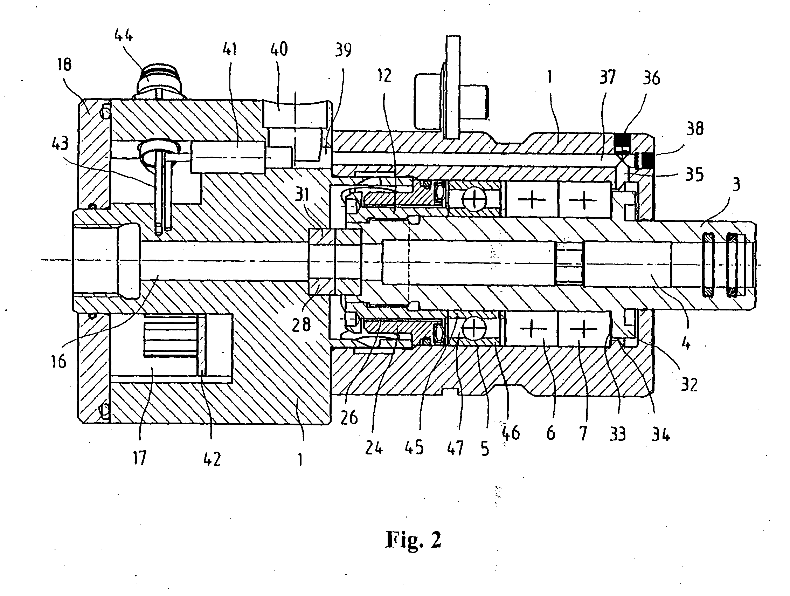

Die in den Figuren 1 und 2 schematisch dargestellte Drehdurchführung enthält ein Gehäuse mit einem in der Zeichnung rechts angeordneten vorderen Gehäuseteil 1 und einem mit diesem dicht verbundenen hinteren Gehäuseteil 2. In dem vorderen Gehäuseteil 1 ist eine Hohlwelle 3 mit einem zentralen Durchgangskanal 4 über mehrere hintereinander angeordnete Drehlager 5, 6 und 7 um eine Mittelachse 8 drehbar gelagert. Auf ein Außengewinde 9 an dem im Gehäuseteil 1 angeordneten inneren Ende der Hohlwelle 3 ist eine mit einem entsprechenden Innengewinde 10 und einem Endflansch 11 versehene Spannbuchse 12 aufgeschraubt. Durch diese Spannbuchse 12 werden die Drehlager 5, 6 und 7 gegen einen Ringabsatz 13 im Inneren des Gehäuseteils 1 vorgespannt. An dem in der Zeichnung rechten äußeren Ende der Hohlwelle 3 ist in den Durchgangskanal 4 z.B. eine hohle Spannstange eines in einer Werkzeugmaschinen-Arbeitsspindel integrierten Werkzeugspanners radial abgedichtet einsteckbar. An der Innenwand des vorderen Gehäuseteils 1 ist im Bereich des inneren Endes der Hohlwelle 3 ein Ringkanal 14 mit einer nach außen führenden Leckageöffnung 15 vorgesehen.

Das hintere Gehäuseteil 2 enthält einen zentralen Durchgangskanal 16 und einen den Durchgangskanal U-förmig umgebenden Aufnahmeraum 17, der durch einen Deckel 18 verschließbar ist. Über eine Gewindebohrung 19 am hinteren Ende des Durchgangskanals 16 ist an den stationären hinteren Gehäuseteil 2 eine Fluid-Versorgungsleitung z.B. für die Zuführung von Kühlschmiermittel zur Werkzeugmaschinen-Arbeitsspindel anschließbar. Der hintere Gehäuseteil 2 weist an seiner dem vorderen Gehäuseteil 1 zugewandten Stirnseite einen mit radialen Durchgangsöffnungen 20 versehenen hohlzylindrischen Ansatz 21 auf, der in das vordere Gehäuseteil 1 ragt und eine mit einer Radialdichtung 22 und einer Vorspannfeder 23 versehene Dichtungshülse 24 gegen das Drehlager 5 drückt. Zwischen der hinteren Stirnseite der abgestuften Dichtungshülse 24 und der vorderen Seite des Endflanschs 11 der Spannbuchse 12 ist ein Radialspalt 25 und zwischen der Innenwand der Dichtungshülse 24 und der Außenwand der Spannbuchse 12 ein erster Ringspalt 26 vorgesehen. Innerhalb des hohlzylindrischen Ansatzes 21 des hinteren Gehäuseteils 2 wird ein Auffangraum 27 gebildet, der über die radialen Durchgangsöffnungen 20 mit dem Ringkanal 14 und der Leckageöffnung 15 in Verbindung steht.

In das hintere Ende der Hohlwelle 3 ist eine mit dieser drehfest verbundene und mitrotierende erste Dichtungsbuche 28 eingesetzt. Diese ist in einen erweiterten Teil des Durchgangskanals 4 am hinteren Ende der Hohlwelle 3 eingesteckt. Die Dichtungsbuchse 28 weist eine hintere stirnseitige Gleitfläche 29 auf, an der eine vordere stirnseitige Gleitfläche 30 einer im hinteren Gehäuseteil 2 verdrehfest angeordneten zweiten Dichtungsbuchse 31 zur Anlage gelangt. Die zweite Dichtungsbuchse 31 ist am vorderen Ende des durch das hintere Gehäuseteil 2 verlaufenden Zufuhrkanals 16 angeordnet und wird durch eine nicht dargestellte Druckfeder axial an die erste Dichtungsbuchse 28 angedrückt. Die beiden Dichtungsbuchsen 28 und 31 sind zweckmäßigerweise aus einem verschleißfesten und temperaturbeständigen Material, wie z.B. Keramik oder dgl. hergestellt. Der im Bereich der beiden Gleitflächen 29 und 30 angeordnete Auffangraum 27 dient zum Sammeln eines Fluids, das als Leckagefluid zwischen den beiden Gleitflächen 29 und 30 der Dichtungsbuchsen 28 und 31 austreten kann. Über die radialen Durchgangsöffnungen 20, den Ringkanal 14 und die Leckageöffnung 15 kann das innerhalb des Auffangraums 27 gesammelte Leckagefluid abgeführt werden.

Wie besonders aus Figur 2 hervorgeht, weist die Hohlwelle 3 im vorderen Bereich des Gehäuseteils 1 einen vor dem Lager 7 angeordneten Ringbund 32 auf. An der den Drehlagern zugewandten Stirnseite des Ringbunds 32 ist zwischen dem Lager 7 und der Stirnseite des Ringbunds 32 ein schmaler Radialspalt 33 vorgesehen. Zwischen der Außenseite des Ringbunds 32 und dem Gehäuseteil 1 ist ferner ein zweiter Ringspalt 34 vorhanden. In den zweiten Ringspalt 34 mündet ein im Gehäuseteil 1 angeordneter Radialkanal 35, der hier als Radialbohrung ausgeführt ist und an der Außenseite des Gehäuseteils 1 durch einen als Gewindestift ausgebildeten Dichtstopfen 36 verschlossen ist. Dieser Radialkanal 35 steht mit einer Axialbohrung 37 in Verbindung, die radial außerhalb der Lager 5 bis 7 parallel zur Hohlwelle 3 durch das gesamte vordere Gehäuseteil 1 verläuft. Die Axialbohrung 37 ist innerhalb des Gehäuseteils 1 auf der zur Leckageöffnung 15 diametral gegenüberliegenden Seite angeordnet.

Die Axialbohrung 37 ist an ihrem in Figur 2 rechten vorderen Ende durch einen ebenfalls als Gewindestift ausgeführten Dichtstopfen 38 verschlossen und mündet an ihrem gegenüberliegenden hinteren Ende in eine vergrößerte Aufnahmebohrung 39 mit einer radialen Ablassöffnung 40 im hinteren Gehäuseteil 2 ein. In die Aufnahmebohrung 39 ragt ein hier als Durchflusssensor ausgeführter Leckagesensor 41, der mit einer innerhalb des Aufnahmeraums 17 im hinteren Gehäuseteil 2 untergebrachten Platine 42 verbunden ist. Auf dieser Platine 42 kann eine entsprechende Auswerteelektronik zur Auswertung der durch den Leckagesensor 40 erfassten Signale angeordnet sein. Von der Platine 42 führen Leitungen 43 zu einer Anschlussbuchse 44, über welche die Auswerteelektronik an eine externe Steuerung oder Anzeigeeinrichtung angeschlossen werden kann.

Durch den ersten Ringspalt 26 zwischen der auf dem inneren Ende der Hohlwelle 3 angeordneten Spannbuchse 12 und der Dichtungshülse 24, durch die zwischen den Außenringen 45 und den Innenringen 46 der Lager 5 bis 7 vorhandenen Durchgänge 47, durch den zweiten Ringspalt 34 zwischen dem Ringbund 32 der Hohlwelle 3 und dem Gehäuseteil 1 sowie durch den Radialspalt 33 wird ein entlang der Hohlwelle verlaufender innerer Leckagekanal gebildet, der mit dem Auffangraum 27 über den Radialspalt 25 zwischen dem Endflansch 11 der Spannbuchse 12 und der hinteren Stirnseite der Dichtungshülse 24 in Verbindung steht. Zur Vereinfachung ist in Figur 2 nur das Lager 5 im Schnitt dargestellt. Auch die beiden anderen Lager 6 und 7 weisen entsprechende Durchgänge 47 auf. Durch die Axialbohrung 37 und die Aufnahmebohrung 39 wird ein äußerer Leckagekanal gebildet, der mit dem inneren Leckagekanal über den Radialkanal 35 verbunden ist.

Wenn sich bei der vorstehend beschriebenen Drehdurchführung das Leckagefluid innerhalb des Auffangraums 27 aufstaut, kann es so über den Radialspalt 25 in den inneren Leckagekanal und von dort über die Radialkanal 35 zum äußeren Leckagekanal gelangen und wird an dessen Ende vom Leckagesensor 41 erfasst.

## Patentansprüche

1. Drehdurchführung für die Zuführung eines Fluids zu einem rotierenden Maschinenteil, die eine in einem Gehäuse (1, 2) drehbar gelagerte Hohlwelle (3) mit einer ersten Gleitfläche (29), eine innerhalb des Gehäuses (1, 2) verdrehfest angeordnete, zu der Hohlwelle (3) koaxiale Dichtungsbuchse (31) mit einer zweiten Gleitfläche (30) zur Anlage an der ersten Gleitfläche (29) und einen innerhalb des Gehäuses (1, 2) angeordneten Auffangraum (27) zum Sammeln des zwischen den beiden Gleitflächen (29, 30) austretenden Leckagefluids enthält, wobei in dem Gehäuse (1, 2) ein mit dem Auffangraum (27) in Verbindung stehender Detektionskanal (26, 33, 34, 37, 39, 47) mit einem darin angeordneten Leckagesensor (41) vorgesehen ist, **dadurch gekennzeichnet, dass** der Detektionskanal (26, 33, 34, 37, 39, 47) einen entlang der Hohlwelle (3) verlaufenden inneren Leckagekanal (26, 33, 34, 47) und mindestens einen dazu radial versetzten äußeren Leckagekanal (37, 39) umfasst, wobei der innere Leckagekanal (26, 33, 34, 47) durch einen ersten Ringspalt (26) zwischen einer auf dem inneren Ende der Hohlwelle (3) angeordneten Spannbuchse (12) und einer im Gehäuse (1, 2) angeordneten Dichtungshülse (24), durch Durchgänge (47) zwischen den Außen- und Innenringen (45, 46) von Drehlagern (5, 6, 7) zur Lagerung der Hohlwelle (3), durch einen Ringspalt (34) zwischen einem Ringbund (32) der Hohlwelle (3) und dem Gehäuse (1, 2) sowie durch einen Radialspalt (33) an der den Drehlagern (5, 6, 7) zugewandten Stirnseite des Ringbunds (32) gebildet wird.

2. Drehdurchführung nach Anspruch 1, **dadurch gekennzeichnet, dass** der äußere Leckagekanal (37, 39) durch mindestens eine parallel zur Hohlwelle (3) verlaufende Axialbohrung (37) in einem vorderen Gehäuseteil (1) und durch eine mit der Axialbohrung (37) verbundene Aufnahmebohrung (39) in einem hinteren Gehäuseteil (2) des Gehäuses (1, 2) gebildet wird.

3. Drehdurchführung nach Anspruch 2, **dadurch gekennzeichnet, dass** die Axialbohrung (37) innerhalb des vorderen Gehäuseteils (1) auf der zu einer Leckageöffnung (15) des Auffangraums (27) diametral gegenüberliegenden Seite angeordnet ist.

4. Drehdurchführung nach einem der Ansprüche 1 bis 3, **dadurch gekennzeichnet, dass** der innere Leckagekanal (26, 34, 47) mit dem Auffangraum (27) über einen Radialspalt (25) zwischen einem Endflansch (11) der Spannbuchse (12) und einer hinteren Stirnfläche der Dichthülse (24) in Verbindung steht.

5. Drehdurchführung nach einem der Ansprüche 1 bis 4, **dadurch gekennzeichnet, dass** der innere Leckagekanal (26, 34, 47) mit dem äußeren Leckagekanal (37, 39) über einen Radialkanal (35) verbunden ist.

6. Drehdurchführung nach einem der Ansprüche 2 bis 5, **dadurch gekennzeichnet, dass** der Leckagesensor (41) in die Aufnahmebohrung (39) des hinteren Gehäuseteils (2) ragt.

7. Drehdurchführung nach einem der Ansprüche 1 bis 6 **dadurch gekennzeichnet, dass** der Leckagesensor (41) ein vorzugsweise nach dem kalorimetrischen Messprinzip arbeitender Durchflusssensor ist.

8. Drehdurchführung nach einem der Ansprüche 1 bis 7, **dadurch gekennzeichnet, dass** der Leckagesensor (41) an eine innerhalb des Gehäuses (1, 2) angeordnete Platine (42) mit einer Auswerteschaltung angeschlossen ist.

9. Drehdurchführung nach Anspruch 8, **dadurch gekennzeichnet, dass** die Platine (42) in einem Aufnahmeraum (17) eines hinteren Gehäuseteils (2) des Gehäuses (1, 2) untergebracht ist.

10. Drehdurchführung nach Anspruch 8 oder 9, **dadurch gekennzeichnet, dass** die Platine (42) über Leitungen (43) mit einer Anschlussbuchse (44) verbunden ist.

## Claims

1. Rotatable coupling for conveying a fluid to a rotating machine part, which coupling contains a hollow shaft (3) mounted rotatably in a housing (1, 2) with a first sliding face (29), a sealing bush (31) arranged inside the housing (1, 2) coaxial with the hollow shaft (3) so that it cannot turn with a second sliding face (30) for bearing on the first sliding face (29), and a collecting chamber (27) arranged inside the housing (1, 2) for collecting the leaking fluid escaping between the two sliding faces (29, 30), with a detection channel (26, 33, 34, 37, 39, 47) communicating with the collecting chamber (27) and having a leakage sensor (41) arranged therein provided in the housing (1, 2), **characterised in that** the detection channel (26, 33, 34, 37, 39, 47) comprises an inner leakage channel (26, 33, 34, 47) running along the hollow shaft (3) and at least one outer leakage channel (37, 39) offset radially in relation thereto, the inner leakage channel (26, 33, 34, 47) being formed by a first annular gap (26) between a clamping bush (12) arranged on the inner end of the hollow shaft (3) and a sealing sleeve (24) arranged in the housing (1, 2), by passages (47) between the outer and inner rings (45, 46) of pivot bearings (5, 6, 7) for mounting the hollow shaft (3), by an annular gap (34) between an annular collar (32) of the hollow shaft (3) and the housing (1, 2) and by a radial gap (33) on the front end of the annular collar (32) facing the pivot bearings (5, 6, 7).

2. Rotatable coupling according to claim 1, **characterised in that** the outer leakage channel (37, 39) is formed by at least one axial bore (37) running parallel to the hollow shaft (3) and located in a front housing part (1) and by a receiving bore (39) connected to the axial bore (37) and located in a rear housing part (2) of the housing (1, 2).

3. Rotatable coupling according to claim 2, **characterised in that** the axial bore (37) is arranged inside the front housing part (1) on the side diametrically opposite a leakage opening (15) of the collecting chamber (27).

4. Rotatable coupling according to one of claims 1 to 3, **characterised in that** the inner leakage channel (26, 34, 47) communicates with the collecting chamber (27) through a radial gap (25) between an end flange (11) of the clamping bush (12) and a rear end face of the sealing sleeve (24).

5. Rotatable coupling according to one of claims 1 to 4, **characterised in that** the inner leakage channel (26, 34, 47) is connected to the outer leakage channel (37, 39) through a radial channel (35).

6. Rotatable coupling according to one of claims 2 to 5, **characterised in that** the leakage sensor (41) projects into the receiving bore (39) of the rear housing part (2).

7. Rotatable coupling according to one of claims 1 to 6, **characterised in that** the leakage sensor (41) is a through-flow sensor preferably working on the calorimetric measuring principle.

8. Rotatable coupling according to one of claims 1 to 7, **characterised in that** the leakage sensor (41) is connected to a circuit board (42) with an evaluation circuit arranged inside the housing (1, 2).

9. Rotatable coupling according to claim 8, **characterised in that** the circuit board (42) is accommodated in a receiving space (17) of a rear housing part (2) of the housing (1, 2).

10. Rotatable coupling according to claim 8 or 9, **characterised in that** the circuit board (42) is connected by means of leads (43) to a connecting socket (44).

## Revendications

1. Traversée rotative destinée à la délivrance d'un fluide à une partie tournante de machine, comprenant un arbre creux (3) monté à rotation dans un carter (1, 2) et offrant une première surface de glissement (29) ; un coussinet d'étanchement (31) agencé à verrouillage rotatif à l'intérieur dudit carter (1, 2), coaxial audit arbre creux (3) et doté d'une seconde surface de glissement (30) conçue pour venir en applique contre ladite première surface de glissement (29) ; et un compartiment collecteur (27) situé à l'intérieur dudit carter (1, 2), en vue de recueillir le fluide de fuite sortant entre les deux surfaces de glissement (29, 30), ledit carter (1, 2) renfermant un canal de détection (26, 33, 34, 37, 39, 47) en communication avec ledit compartiment collecteur (27), et dans lequel se trouve un détecteur de fuites (41), **caractérisée par le fait que** ledit canal de détection (26, 33, 34, 37, 39, 47) se compose d'un canal intérieur d'effusion (26, 33, 34, 47) s'étendant le long dudit arbre creux (3), et d'au moins un canal extérieur d'effusion (37, 39) décalé radialement vis-à-vis du canal précité, ledit canal intérieur d'effusion (26, 33, 34, 47) étant formé par un premier interstice annulaire (26) entre un coussinet de serrage (12), implanté sur l'extrémité intérieure de l'arbre creux (3), et une douille d'étanchement (24) logée dans ledit carter (1, 2) ; par des passages (47), entre les bagues extérieures et intérieures (45, 46) de paliers rotatifs (5, 6, 7) assignés au montage dudit arbre creux (3) ; par un interstice annulaire (34), entre ledit carter (1, 2) et un collet annulaire (32) dudit arbre creux (3) ; ainsi que par un interstice radial (33), à la face extrême dudit collet annulaire (32) qui est tournée vers lesdits paliers rotatifs (5, 6, 7).

2. Traversée rotative selon la revendication 1, **caractérisée par le fait que** le canal extérieur d'effusion (37, 39) est constitué d'au moins un alésage axial (37) s'étendant parallèlement à l'arbre creux (3), dans une partie antérieure (1) du carter ; et d'un logement alésé (39) relié audit alésage axial (37), dans une partie postérieure (2) dudit carter (1, 2).

3. Traversée rotative selon la revendication 2, **caractérisée par le fait que** l'alésage axial (37), pratiqué à l'intérieur de la partie antérieure (1) du carter, est situé du côté diamétralement opposé à un orifice d'écoulement (15) du compartiment collecteur (27).

4. Traversée rotative selon l'une des revendications 1 à 3, **caractérisée par le fait que** le canal intérieur d'effusion (26, 34, 47) est en communication avec le compartiment collecteur (27) par l'intermédiaire d'un interstice radial (25), entre une collerette d'extrémité (11) du coussinet de serrage (12) et une face extrême postérieure de la douille d'étanchement (24).

5. Traversée rotative selon l'une des revendications 1 à 4, **caractérisée par le fait que** le canal intérieur d'effusion (26, 34, 47) communique avec le canal extérieur d'effusion (37, 39) par l'entremise d'un canal radial (35).

6. Traversée rotative selon l'une des revendications 2 à 5, **caractérisée par le fait que** le détecteur de fuites (41) s'engage dans le logement alésé (39) de la partie postérieure (2) du carter.

7. Traversée rotative selon l'une des revendications 1 à 6, **caractérisée par le fait que** le détecteur de fuites (41) est un capteur de débits fonctionnant, de préférence, selon le principe du mesurage calorimétrique.

8. Traversée rotative selon l'une des revendications 1 à 7, **caractérisée par le fait que** le détecteur de fuites (41) est connecté à une platine (42) logée à l'intérieur du carter (1, 2), pourvue d'un circuit d'interprétation.

9. Traversée rotative selon la revendication 8, **caractérisée par le fait que** la platine (42) est intégrée dans un espace de réception (17) d'une partie postérieure (2) du carter (1, 2).

10. Traversée rotative selon la revendication 8 ou 9, **caractérisée par le fait que** la platine (42) est raccordée à une douille de connexion (44), par l'intermédiaire de conducteurs (43).
